# NEW EUROPEAN PATENT SPECIFICATION

(11) **EP 1 608 854 B2**
(45) Date of publication and mention of the opposition decision: **18.08.2021**
(45) Mention of the grant of the patent: 06.04.2011
(21) Application number: 04714777.2
(22) Date of filing: 26.02.2004
(51) Int. Cl.: F01N 3/08, F01N 3/20, B01D 53/94

(54) **METHOD OF PURIFICATION OF NITROGEN OXIDES BY THE SELECTIVE CATALYTIC REDUCTION IN THE LEAN EXHAUST GAS OF INTERNAL COMBUSTION ENGINES**
VERFAHREN ZUR REINIGUNG VON STICKOXIDEN DURCH SELEKTIVE KATALYTISCHE REDUKTION IN MAGEREN ABGASEN VON VERBRENNUNGSMOTOREN
PROCEDE D'EPURATION D'OXYDES D'AZOTE PAR LA REDUCTION CATALYTIQUE SELECTIVE DANS LE GAZ D'ECHAPPEMENT DE MELANGE PAUVRE DES MOTEURS A COMBUSTION INTERNE

(30) Priority: 26.02.2003 DE 10308287
(43) Date of publication of application: 28.12.2005
(73) Proprietor: Umicore AG & Co. KG, 63457 Hanau-Wolfgang (DE)
(72) Inventor: PFEIFER, Markus, 42719 Solingen (DE); VAN SETTEN, Barry, 63628 Bad Soden-Salmünster (DE); SPURK, Paul, 64331 Weiterstadt (DE); GIESHOFF, Jürgen, 63599 Biebergemünd (DE); LOX, Egbert, 36355 Hochwaldhausen (DE); KREUZER, Thomas, 61184 Karben (DE)
(86) International application number: PCT/EP2004/001945
(87) International publication number: WO 2004/076829

(56) References cited:
- EP-A- 0 666 099
- EP-A- 1 027 919
- EP-A- 1 176 290
- EP-A2- 1 069 286
- WO-A1-00/21647
- DE-A- 10 011 612
- US-A- 4 828 807
- US-B1- 6 173 568
- PATENT ABSTRACTS OF JAPAN vol. 1998, no. 11, 30 September 1998 (1998-09-30) & JP 10 156144 A (IWAMOTO MASAKAZU;HINO MOTORS LTD), 16 June 1998 (1998-06-16)

## Description

The present invention relates to a method for the selective catalytic reduction (SCR) of nitrogen oxides in the lean exhaust gas of internal combustion engines.

During the combustion of fuels in internal combustion engines, an exhaust gas is formed which contains unburned hydrocarbons (HC), carbon monoxide (CO), nitrogen oxides (NOx) and particles (soot) as pollutants. In diesel engines and lean-burn gasoline engines, removal of the nitrogen oxides and particles causes special difficulties.

Reduction of particles and nitrogen oxide emissions from motor vehicles envisaged by law (EURO V in Europe and LEV II in the United States, scheduled for 2007) therefore requires novel exhaust-gas purification systems be provided allowing to meet the future limits for maximum pollutant emission.

In order to convert the nitrogen oxides developed during combustion, two different catalytic methods have proven to be successful in the past: on the one hand, there is the NOx adsorber technology in which, during lean operations of the engine, the nitrogen oxides are adsorbed on a so-called NOx storage catalyst and, during rich operations, are desorbed and reduced; and on the other hand, the SCR technology in which the nitrogen oxides contained in the oxygen-rich exhaust gas are reduced selectively to nitrogen and water using ammonia (NH₃) or a corresponding precursor substance convertible into ammonia (SCR = selective catalytic reduction).

While in the NOx adsorber technologies the sulfur content in fuel leads to poisoning of the NOx storage components and long-term stability also leaves much to be desired, the ammonia SCR method has in many cases already proved its durability in long-term use for the removal of nitrogen oxides from power-station exhaust gases. In addition, it appears that according to today's state of the art, NOx conversion rates of up to 90% required in future can only be realized by employing SCR technologies. Especially in heavy-duty trucks, where a durability of more than 400,000 miles is required, SCR systems will very likely be employed.

Due to the high toxicity and volatility of ammonia, non-poisonous precursor compounds, especially aqueous urea solutions, are preferably employed in mobile applications for motor traffic. The urea solution is hydrolyzed to ammonia and carbon dioxide by means of hydrolysis catalysts or directly on the SCR catalyst. Using special metering systems upstream of the hydrolysis and the SCR catalyst, respectively, the urea solution is injected into the exhaust-gas flow.

A disadvantage of this type of exhaust-gas aftertreatment is that both the hydrolysis of urea and the SCR reaction using the common SCR catalysts start only at temperatures above 160 to 200 °C, that is, the light-off temperatures of SCR catalysts for the low-temperature range is between 160 and 200 °C. As used in this invention, the light-off temperature of a catalyst refers to the temperature upstream of the catalyst at which the catalyst converts the pollutant in question (here the nitrogen oxides) just at a 50% rate.

Thus, during operating states with exhaust-gas temperatures below this temperature range, the nitrogen oxides generated by the engine pass the exhaust-gas purification system unchanged and are released into the environment. In modern diesel vehicles, this happens not only after the cold start, but also during normal operation under operating conditions at low load or when idling. The inventors found that when a diesel engine is idling, only about 65% of the nitrogen oxides contained in its exhaust gas are converted into nitrogen and water at the SCR catalyst. By contrast, at temperatures above 300 °C, the conversion rate is 90% and more. When the performance of an exhaust-gas purification system for diesel engines is assessed, idle operation accounts for 20% of the assessment, so that a considerable potential for improvement exists here.

To account for this fact, the German patent application DE 10054877 A1 already described an exhaust-gas purification system which includes a catalyst having catalytically active components for the selective catalytic reduction (SCR components) and an additional storage component for nitrogen oxides.

The purpose of this additional NOx storage component is to temporarily store the nitrogen oxides contained in the exhaust gas at low temperatures below 160 to 200 °C on the SCR catalyst and to release them at higher temperatures so that they can afterwards be reduced on the SCR catalyst using surplus ammonia. This solution, however, has been only partly successful.

The object of the present invention is to provide an exhaust-gas purification system which has improved activity for the conversion of nitrogen oxides at low exhaust-gas temperatures compared to the prior art. Another subject matter of this invention is the simultaneous reduction of the particulate emission from the lean-burn internal combustion engines. Moreover, the invention is to provide a method of exhaust-gas purification with an improved conversion rate of the nitrogen oxides at low exhaust-gas temperatures.

This object is solved by an exhaust-gas purification system for the selective catalytic reduction of nitrogen oxides according to claim 1 and a method of removing nitrogen oxides according to claim 10.

The NOx catalyst arranged according to the invention upstream of the SCR catalyst in the exhaust gas system fulfills two functions.

First of all, it is capable of adsorbing the nitrogen oxides contained in the still relatively cold exhaust gas following the cold start of the engine or during idling. This prevents the nitrogen oxides from leaving the not yet active SCR catalyst without being converted into water and nitrogen. Only at an elevated temperature they nitrogen oxides will be desorbed and can then be converted at the SCR catalyst.

Secondly, the NOx storage catalyst increases the ratio of nitrogen dioxide to nitrogen monoxide in the exhaust gas, thereby improving the efficiency of the SCR catalyst. That is, the activity of the SCR catalyst for converting the nitrogen oxides is highest when nitrogen dioxide and nitrogen monoxide have an approximate volume ratio of 1:1 in the exhaust gas. Depending on the engine operating conditions, the raw exhaust gas of a lean-mix engine contains 65 to 95 vol.% nitrogen monoxide and, accordingly, differs from the optimum composition.

Preferably, the NOx storage catalyst is applied in the form of a coating on an inert carrier. Suitable carriers are the so-called honeycomb carriers made of ceramic or metal which are commonly used in the catalysis of automotive exhaust gases. In a preferred embodiment of the exhaust-gas purification system according to the invention, the NOx storage catalyst is applied as a coating on a diesel particulate filter. In this case, this unit fulfills a third function, i.e. the removal of soot particles from the exhaust gas. The diesel particulate filter may be designed as a wall flow filter, foamed ceramic filter, ceramic fiber filter or wire-mesh filter. These carriers and filters are known to the person skilled in the art of automotive exhaust-gas catalysis. Therefore, a detailed description of these carriers will be omitted.

The NOx storage catalyst includes at least one alkaline compound of elements from the group consisting of alkali metals, alkaline-earth metals or rare earths which are coated or activated with at least one of the platinum group metals platinum, palladium, rhodium or iridium.

The oxidation activity of the catalyst for nitrogen monoxide may be increased further if the NOx storage catalyst additionally includes catalytically active components on the basis of support oxides from the group consisting of aluminum oxide, silicon dioxide, cerium oxide, zirconium oxide, titanium oxide or mixed oxides thereof which are coated with at least one of the platinum group metals platinum, palladium, rhodium and iridium.

It is especially preferred that the NOx storage catalyst includes storage components on the basis of cerium oxide, which are coated with platinum, and additionally platinum as an oxidizing catalyst on a support based on aluminum oxide. The storage components on the basis of cerium oxide exhibit the lowest light-off temperatures for the storage of nitrogen oxides and are therefore particularly suitable for the exhaust-gas purification system according to the invention. They are capable of storing nitrogen oxides to a high degree at temperatures as low as about 120 °C and of gradually releasing them at higher temperatures, so that they can be converted subsequently at the downstream SCR catalyst.

Here, cerium oxide is employed as a mixed oxide, with zirconium oxide. Preferred are cerium/zirconium mixed oxides having a content of zirconium oxide between 5 and 30 wt.% referred to the mixed oxide's total weight. The above-mentioned mixed oxides are particularly resistant to high temperature stresses which may occur during full-load operation of the diesel engine or a filter regeneration, for example. A further increase of temperature resistance may be obtained by doping the mixed oxide, for example with praseodymium oxide.

The aluminum oxide used as a support for platinum is an aluminum oxide of the so-called transition series, which has a high specific surface area between 10 and 400 m²/g. Doping this material with 2 to 10 wt.% lanthanum oxide may also stabilize it against thermal stresses. An aluminum silicate having a silicon dioxide content between 1 and 40 wt.% referred to the total weight of the aluminum silicate is also particularly suitable.

It is known that all kind of NOx storage materials are sensitive to sulfur poisoning. This is due to the chemical similarity of NO₂ and SO₃. A material which is able to adsorb nitrogen oxides by forming nitrates will do the same with sulfur oxides by forming sulfates. In principle the affinity to the latter reaction is higher. This means that formed nitrates may be substituted by sulfates but this reaction is not reversible. It is well known that from that reason standard NOx storage catalysts have to be desulfated from time to time. Such a desulfation can be performed at high temperatures under rich exhaust gas conditions. But specially designed NOx storage materials e.g. as the one described above on the basis of cerium oxide or mixed oxides of cerium and zirconium oxide can be desulfated also under lean exhaust gas condition at elevated temperatures of about 600 °C. This is called thermal desulfation in the following.

Normally a diesel particulate trap has to be heated-up periodically to combust the accumulated soot. For this combustion a temperature of about 600 - 650 °C is needed. If the NOx storage catalyst described above on the basis of cerium oxide or mixed oxides of cerium and zirconium oxide is coated on a filter, a periodical thermal desulfation in parallel to the filter regeneration can be achieved.

Furthermore, if the NOx storage catalyst is coated on a flow-through honeycomb monolith and the entire exhaust system contains a particulate filter the temperature increase for a filter regeneration can be used as well to desulfate the NOx storage catalyst.

The SCR components of the SCR catalyst preferably include a solid acid system of titanium dioxide and vanadium oxide. In addition, this material may include at least one component from the group consisting of tungsten oxide, molybdenum oxide, silicon dioxide, sulfate and zeolites, wherein the zeolites may be present in the acid H-form or be exchanged with metal ions. However, the SCR catalyst may entirely consist of zeolites, wherein the zeolites are present in the acid H-form or are exchanged with metal ions, in particular with iron and copper, within their exchange capacity.
components to the catalyst which lower the ignition temperature of the diesel soot in order to facilitate the regeneration of the filter by burning off the soot from time to time. Suitable materials are known from the German patent applications DE 3141713 A1 and DE 3232729 A1, for example. These are materials such as lithium oxide, copper chloride, vanadium oxide/alkali oxide combinations, lithium, sodium, potassium or cerium vanadate or mixtures thereof, for example. For lowering the ignition temperature, cerium oxide, which is already to be used as a storage component, is well suited, too.

A diesel particulate filter is employed as a carrier for the NOx storage catalyst. It is preferred to add components to the catalyst which lower the ignition temperature of the diesel soot in order to facilitate the regeneration of the filter by burning off the soot from time to time. Suitable materials are known from the German patent applications DE 3141713 A1 and DE 3232729 A1, for example. These are materials such as lithium oxide, copper chloride, vanadium oxide/alkali oxide combinations, lithium, sodium, potassium or cerium vanadate or mixtures thereof, for example. For lowering the ignition temperature, cerium oxide, which is already to be used as a storage component, is well suited, too.

In a preferred embodiment, a so-called wall flow filter is used as a diesel particulate filter, the inlet side of which is provided with a coating made of pure cerium oxide to lower the ignition temperature of the diesel exhaust particulates and the outlet side of which comprises a coating made of a mixture of platinum on cerium/zirconium mixed oxide and platinum on γ-aluminum oxide stabilized with 4 wt.% lanthanum oxide.

During the addition of ammonia to the exhaust gas, overdosage and, consequently, undesired emission of ammonia to the environment may occur. To prevent this from happening, a so-called ammonia guard catalyst, i.e. an oxidation catalyst for oxidizing the surplus ammonia, may be arranged downstream of the SCR catalyst.

The ammonia required for the selective catalytic reduction is preferably added to the exhaust gas in the form of a urea solution, but other precursor compounds that are easily decomposable into ammonia are possible. In order to facilitate the decomposition of urea into ammonia and carbon dioxide, a so-called hydrolysis catalyst may be provided upstream of the SCR catalyst.

The invention will now be explained in more detail referring to the accompanying Figures 1 to 4 and the Comparative Examples and one Example, wherein:
Figure 1 shows the basic construction of the exhaust-gas purification system;
Figure 2 shows the exhaust-gas purification system with an additional hydrolysis catalyst and ammonia guard catalyst;
Figure 3 shows a test result of the nitrogen oxide emissions at an exhaust-gas purification system including an SCR catalyst and an upstream oxidation catalyst; and
Figure 4 shows the nitrogen oxide emissions at an exhaust-gas purification system including an SCR catalyst and an upstream diesel particulate filter, the latter being coated with an oxidation catalyst and a NOx storage catalyst.

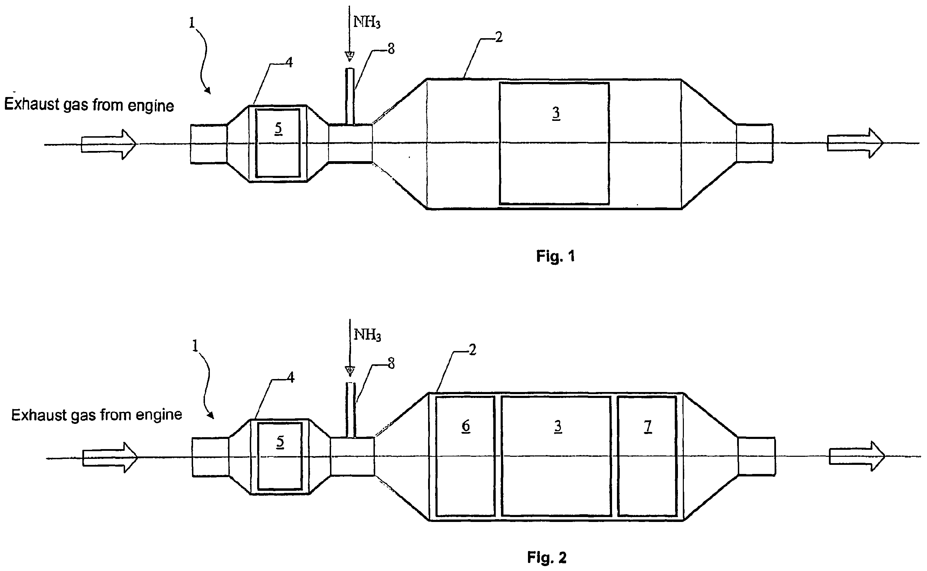

Fig. 1 is a view showing the basic construction of the exhaust-gas purification system 1 according to the invention. The system includes an SCR catalyst 3 in a converter housing 2. Upstream of the SCR catalyst, a catalyst 5 in a converter housing 4 is provided. Metering means 8 for the supply of ammonia or a compound decomposable into ammonia to the exhaust gas is located between both converter housings. The metering means in Fig. 1 is shown only as a simple supply tube to exemplify the metering means known to the person skilled in the art.

The catalyst 5 includes both an oxidation catalyst and a NOx storage catalyst as active components. These active components are applied in the form of a coating on a diesel particulate filter.

Fig. 2 shows another embodiment of the exhaust-gas purification system according to the invention. To safely prevent emission of ammonia during accidental overdosage, the SCR catalyst 3 is provided with a downstream ammonia guard catalyst 7. The latter is a common oxidation catalyst, the active components of which may be formed by platinum/aluminum oxide (aluminum oxide coated, i.e. activated, with platinum). In addition, a hydrolysis catalyst 6 for the hydrolysis of urea into ammonia is arranged upstream of the SCR catalyst. All three catalysts 6, 3 and 7 are preferably accommodated in a single converter housing 2.

In the embodiments of the exhaust gas systems according to figures 1 and 2 a NOx storage catalyst is used on the basis of mixed oxides of cerium oxide and zirconium oxide as herein described above. The exhaust gas systems are then operated as follows.

The lean exhaust gas of the internal combustion engine is first routed over the NOx storage catalyst and subsequently over the SCR catalyst for selective catalytic reduction and wherein a compound decomposable into ammonia is supplied to the exhaust gas between the NOx storage catalyst and the SCR catalyst. The internal combustion engine can be operated continuously with a lean air/fuel mixture. The nitrogen oxides contained in the exhaust gas will be stored by the NOx storage catalyst at low exhaust gas temperatures and will gradually release them with rising exhaust gas temperature. At temperatures above approximately 300 °C nearly all stored nitrogen oxides will have been released. The released nitrogen oxides will then be converted at the downstream SCR catalyst to nitrogen and water. No periodic changing of the air/fuel mixture fed to the internal combustion engine to rich air/fuel mixtures is necessary.

The nitrogen oxides storage capacity of the catalyst will gradually decrease due to sulfur poisoning as already explained above. The original storage capacity is re-established from time to time under lean exhaust gas conditions by increasing the exhaust gas temperature up to approximately 600 °C. The measures for increasing the exhaust gas temperature of the internal combustion are well known to the expert. This is done in such a way that the exhaust gas composition remains net oxidizing.

In case the exhaust system contains in addition a diesel particulate filter then a very beneficial variety of the described process results. The particulate filter has to be regenerated from time to time by combusting the diesel soot collected on the filter. This is done by increasing the exhaust gas temperature to the ignition temperature of the diesel soot while maintaining net oxidizing conditions. The ignition temperature is sufficient to also desulfate the NOx storage catalyst. Thus, filter regeneration and desulfation of the NOx storage catalyst take place in parallel. The NOx storage catalyst is automatically desulfated whenever the particulate filter is regenerated.

A most preferred process results if the NOx storage catalyst is coated onto the particulate filter itself.

### Comparative example

An exhaust-gas purification system according to the prior art for a 4.2-liter diesel engine was assembled using a pre-catalyst and an SCR catalyst.

The pre-catalyst was a diesel oxidizing catalyst as shown in Example 1 of EP 0920913 A1 (Pt on aluminum silicate mixed with DAY-zeolite), which was applied in the form of a coating on a metallic flow-through type honeycomb carrier having a volume of 2 liters and a cell density of 62 cm⁻². The coating concentration was 200 g/l of honeycomb volume, and the platinum concentration was 3,2 g/l (90 g/ft³) of honeycomb volume.

The SCR catalyst was an iron-exchanged ZSM5-zeolite catalyst which was applied in the form of a coating on a metallic honeycomb carrier having a volume of 4.6 liters and a cell density of 62 cm⁻².

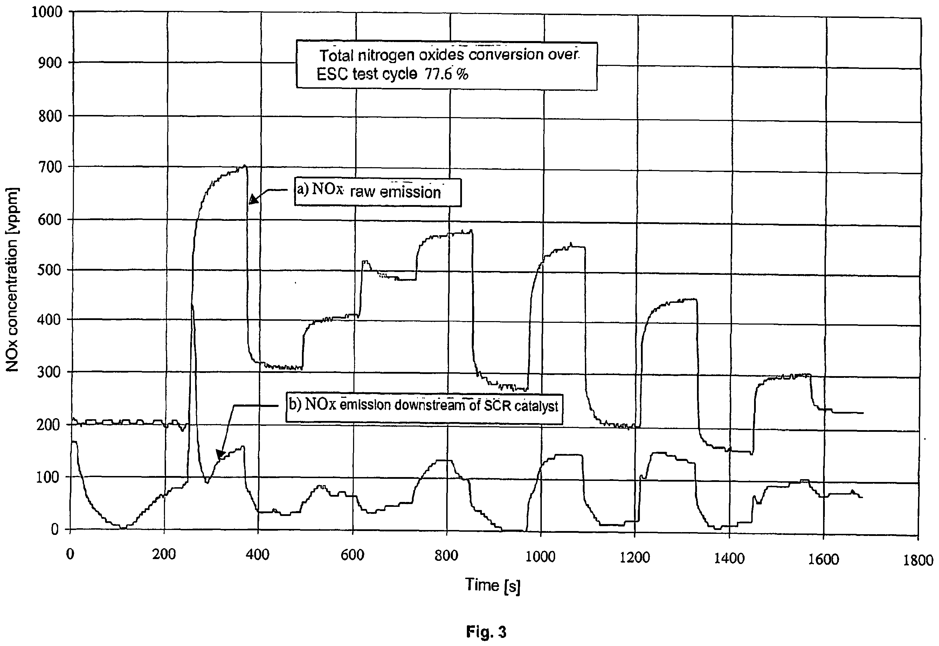

Figure 3 shows the emission of this system from the diesel engine and exhaust-gas purification system during the so-called ESC (European Stationary Cycle) test cycle. This test cycle has been specifically developed for the emission certification of heavy-duty diesel engines and includes a total of 13 different load states with an overall duration of 1680 seconds.

Curve (a) in Figure 3 represents the nitrogen-oxide raw emission of the diesel engine. Curve (b) is the resulting NOx emission downstream of the SCR catalyst. Over the duration of 77.6 %.

### Example

The coating of the pre-catalyst of the exhaust-gas purification system as described in the comparative example was replaced by a coating made of platinum-activated cerium/zirconium mixed oxide (80 wt.% cerium oxide, 20 wt.% zirconium oxide). The coating concentration was 200 g/l and the platinum concentration was 2.65 g/l (75 g/ft³) of honeycomb volume. Here, the cerium/zirconium mixed oxide constituted the NOx storage component of the storage catalyst.

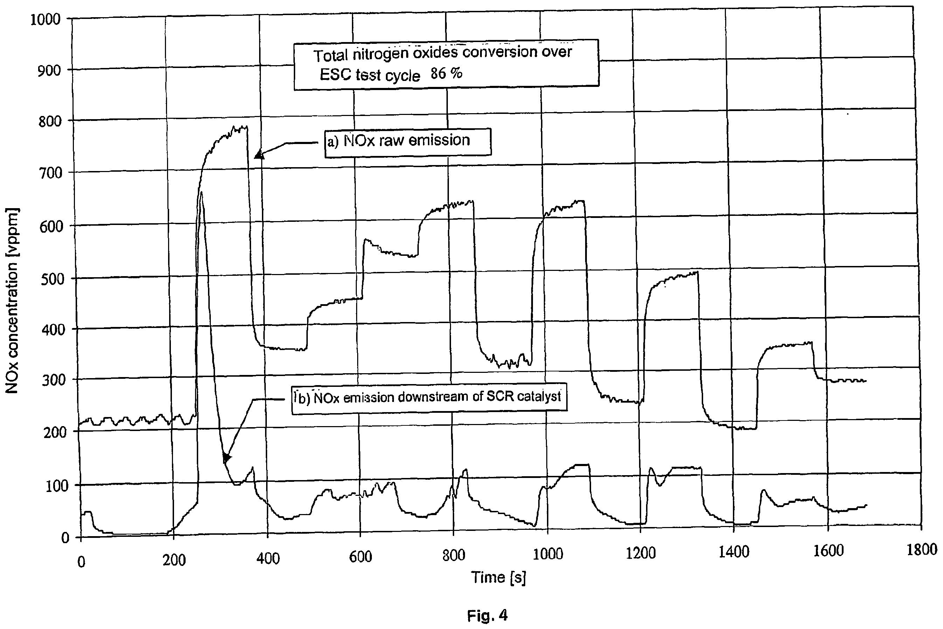

Figure 4 shows the emissions measured on this system during the ESC test cycle run. As an average over the entire cycle, the nitrogen-oxide conversion rate was about 86 %, being clearly higher than in the exhaust-gas purification system according to the prior art.

### Example (not according to the invention)

A comparison of the two plots of Figure 3 and Figure 4 shows that, in the exhaust-gas purification system according to Fig. 3, relatively high nitrogen-oxide emissions occur during the idling phase at the beginning of the test cycle. By contrast, the exhaust-gas purification system according to Fig. 4 exhibits only low nitrogen-oxide emissions during the first 240 seconds, because the NOx storage material used adsorbs the nitrogen oxides already at relatively low exhaust-gas temperatures. Nevertheless, with increasing load and after passing the desorption temperature a relatively strong desorption peak occurs. As an average over the entire test cycle, however, the exhaust-gas purification system results in a substantial improvement in the nitrogen-oxide conversion rate.

## Claims

1. A method of removing nitrogen oxides from the lean exhaust gas of an internal combustion engine by selective catalytic reduction using ammonia, wherein a NOx storage catalyst is based on
a mixed oxide of cerium oxide and zirconium oxide and the internal combustion engine is operated continuously with a lean air/fuel mixture and the resulting lean exhaust gas is routed first over the NOx storage catalyst and subsequently over an SCR catalyst for the selective catalytic reduction, wherein a compound decomposable into ammonia is supplied to the exhaust gas between the NOx storage catalyst and the SCR catalyst, and wherein the NOx storage catalyst is coated on a diesel particulate filter which is regenerated from time to time by increasing the exhaust gas temperature to the ignition temperature of the diesel soot collected on the filter and at the same time the NOx storage catalyst is automatically desulfated.

## Patentansprüche

1. Verfahren zum Entfernen von Stickoxiden aus dem mageren Abgas eines Verbrennungsmotors durch selektive katalytische Reduktion unter Verwendung von Ammoniak, wobei ein NOx-Speicherkatalysator auf einem Mischoxid aus Ceroxid und Zirkonoxid basiert und der Verbrennungsmotor kontinuierlich mit einem mageren Luft/Kraftstoff-Gemisch betrieben wird und das resultierende magere Abgas zur selektiven katalytischen Reduktion zunächst über den NOx-Speicherkatalysator und anschließend über einen SCR-Katalysator geleitet wird, wobei dem Abgas zwischen dem NOx-Speicherkatalysator und dem SCR-Katalysator eine zu Ammoniak zersetzbare Verbindung zugeführt wird, und wobei der NOx-Speicherkatalysator auf einen Dieselpartikelfilter aufgebracht ist, der von Zeit zu Zeit durch Erhöhen der Abgastemperatur auf die Zündtemperatur des auf dem Filter gesammelten Dieselrußes regeneriert wird und der NOx-Speicherkatalysator gleichzeitig automatisch desulfatiert wird.

## Revendications

1. Procédé d'élimination d'oxydes d'azote du gaz d'échappement pauvre d'un moteur à combustion interne par réduction catalytique sélective en utilisant de l'ammoniac, dans lequel un catalyseur accumulateur de NOx est basé sur un oxyde mixte d'oxyde de cérium et d'oxyde de zirconium et le moteur à combustion interne est mis en fonctionnement de façon continue avec un mélange air/carburant pauvre et le gaz d'échappement pauvre résultant est acheminé d'abord par-dessus le catalyseur accumulateur de NOx puis par-dessus un catalyseur SCR pour la réduction catalytique sélective, dans lequel un composé décomposable dans l'ammoniac est alimenté au gaz d'échappement entre le catalyseur accumulateur de NOx et le catalyseur SCR, et dans lequel le catalyseur accumulateur de NOx est revêtu sur un filtre à particules diesel qui est régénéré de temps à autre en augmentant la température de gaz d'échappement à la température d'inflammation des suies de diesel collectées sur le filtre et au même moment le catalyseur accumulateur de NOx est automatiquement désulfaté.
